# EUROPEAN PATENT APPLICATION

(11) **EP 2 192 393 A1**
(43) Date of publication of application: **02.06.2010**
(21) Application number: 08792160.7
(22) Date of filing: 04.08.2008
(51) Int. Cl.: G01G 19/387, B65B 37/18

(54) **WEIGHING DEVICE**

(30) Priority: 17.08.2007 JP 2007213178
(71) Applicant: Ishida Co., Ltd., Sakyo-ku Kyoto-shi Kyoto 606-8392 (JP)
(72) Inventor: KIMURA, Takashi, Ritto-shi Shiga 520-3026 (JP)
(74) Representative: Kastel, Stefan
(86) International application number: PCT/JP2008/063956
(87) International publication number: WO 2009/025164

(57) **Abstract**

In order to reliably improve the operating rate and the yield rate in a weighing system (1) that performs combinatorial computation of weighing results resulting from plural weighing means that weigh goods, selects a combination that is close to a target value which is a value obtained by adding a correction value to a lower limit value within a predetermined weight range, and quantitatively weighs the goods, the weighing system is equipped with plural weighing means (2), combinatorial computing means (3), weight checking means (6), correction value computing means (8) and correction value inputting means (9). The plural weighing means (2) weigh goods. The combinatorial computing means (3) performs combinatorial computing of the weighing results, selects a combination of the goods that is close to a target value obtained by adding a correction value to a lower limit value within a predetermined weight range, and causes the goods to be discharged from their corresponding weighing means. The weight checking means (6) is disposed downstream of the weighing means and checks the weights of the goods that have been discharged from the weighing means. The correction value computing means (8) calculates the correction value on the basis of those checking results. The correction value inputting means (9) inputs the correction value to the combinatorial computing means.

## Description

### TECHNICAL FIELD

The present invention relates to a weighing system that performs combinatorial computation of weighing results resulting from plural weighing means that weigh goods, selects a combination that is close to a target value obtained by adding a correction value to a lower limit value within a predetermined weight range, and quantitatively weighs the goods.

### BACKGROUND ART

Conventionally, when quantitatively weighing goods such as potato chips, there has been employed a weighing system that distributively supplies to plural weighing means and weighs those goods, selects a combination that falls within a predetermined weight range by performing combinatorial computation of those weighed weights, and causes the goods to be discharged from the weighing means of that combination. In this weighing system, in order to prevent short weight of the weighed goods, the weighing system is configured to set, in a predetermined weight range defined by a lower limit value W_{L} and an upper limit value W_{U}, a target value (W_{L} + α) obtained by adding a correction value α to the lower limit value W_{L} and to select a combination that is close to this target value (W_{L} + α).
Moreover, after combination selection has been performed, before the goods of that combination are discharged, the weighing system reacquires the weighed weight from the weighing means whose combination has been selected and checks the weight value of that combination, and when the weight value falls below the lower limit value W_{L}, the weighing system halts the discharge of the goods from each of the weighing means to reliably prevent short weight. Here, when the correction value α is set large, there becomes less halting of the discharge of the goods resulting from short weight and the operating rate improves, but the average value of the combination weight becomes large overall and the yield rate deteriorates. Further, when the correction value α is set small, the yield rate improves but the operating rate deteriorates.
Thus, the applicant has proposed a technology which, in a weighing system such as described above, detects weight differences between weight values that have been combinatorially computed before and weight values that have been calculated at the time of rechecking and, on the basis of these weight differences and past weight differences, cause a correction value α that is optimum for improving the operating rate and the yield rate to be calculated (see patent document 1). By performing combinatorial weighing on the basis of a target value obtained by adding this correction value, the operating rate and the yield rate can be improved in real time.
Patent Document 1: JP-A No. 7-83742

### DISCLOSURE OF THE INVENTION

### <Technical Problem>

However, sometimes the weighing system described in patent document 1 cannot calculate a correction value that is suited for improving the operating rate and the yield rate because the weighing means that is used at the time of combinatorial computation and at the time of rechecking the weight of that combination is the same. For example, when some of the weighed goods adhere to the inside of the weighing means, the goods that are actually discharged become lighter in weight than the weight at the time of combinatorial computation, so it is necessary to set the correction value large, but because the same weighing means is used at the time of rechecking, the fact that the goods are lightweight cannot be detected and, as a result, changing to an appropriate correction value becomes unable to be performed.
It is an object of the present invention to reliably improve the operating rate and the yield rate in a weighing system that performs combinatorial computation of weighing results resulting from plural weighing means that weigh goods, selects a combination that is close to a target value obtained by adding a correction value to a lower limit value within a predetermined weight range, and quantitatively weighs the goods.

### <Solution to the Problem>

The present invention comprises plural weighing means, combinatorial computing means, weight checking means, correction value computing means and correction value inputting means. The plural weighing means weigh goods. The combinatorial computing means performs combinatorial computation of weighing results obtained by the weighing means. Further, the combinatorial computing means selects a combination of the goods that is close to a target value and causes the goods to be discharged from the weighing means. The target value is a value within a predetermined weight range and is a value obtained by adding a correction value to a lower limit value of the predetermined weight range. The weight checking means is disposed downstream of the weighing means. Further, the weight checking means checks weights of the goods that have been discharged from the weighing means. The correction value computing means calculates the correction value on the basis of checking results obtained by the weight checking means. The correction value inputting means inputs the calculated correction value to the combinatorial computing means.
Further, it is preferable that the correction value computing means calculates a correction value that satisfies a predetermined operating rate and yield rate.
Moreover, it is preferable that the weighing system further comprises packaging means and sorting means. The packaging means packages the goods that have been discharged from the weighing means to manufacture packaged products. The sorting means sorts the packaged products on the basis of the checking results obtained by the weight checking means.

### <Advantageous Effects of the Invention>

According to the present invention, the weighing system corrects the target value of the weighed weights on the basis of the checking results obtained by the weight checking means that is disposed separately from the weighing means that weigh the goods. For that reason, appropriate correction is performed even when the weighing values resulting from the weighing means and the weight values of the goods that are actually discharged differ because of adherence of the goods to the weighing means or the like.

### BRIEF DESCRIPTION OF THE DRAWINGS

FIG. 1 is a block diagram showing an overview of a weighing system pertaining to an embodiment; and
FIG. 2 is a diagram describing the setting of a correction value in the weighing system pertaining to the embodiment.

### EXPLANATION OF THE REFERENCE SIGNS

- 1: Weighing System
- 2: Weighing Means
- 3: Combinatorial Computing Means
- 4: Packaging Means
- 5: Conveying Means
- 6: Weight Checking Means
- 7: Sorting Means
- 8: Correction Value Computing Means
- 9: Correction Value Inputting Means
- G: Goods
- P: Packaged Product
- W_{L}: Lower Limit Value
- W_{T}: Target Value
- W_{U}: Upper Limit Value
- W_{X}: Weighed Weight Value
- W_{µ}: Average Weight Value
- α: Correction Value
- σ: Standard Deviation

### BEST MODE FOR CARRYING OUT THE INVENTION

An embodiment of the present invention will be described below with reference to the drawings.

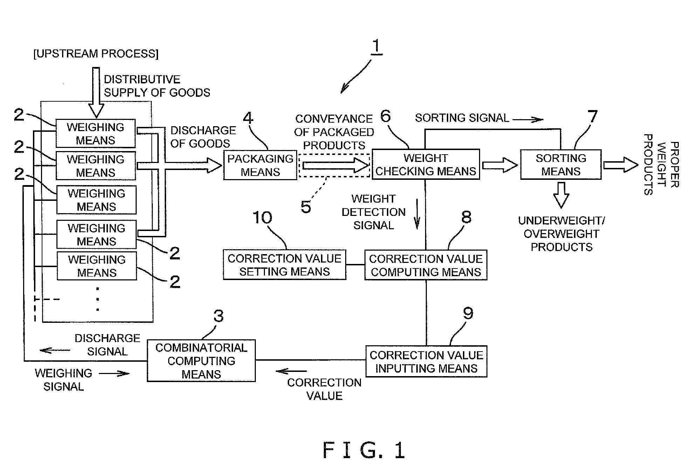

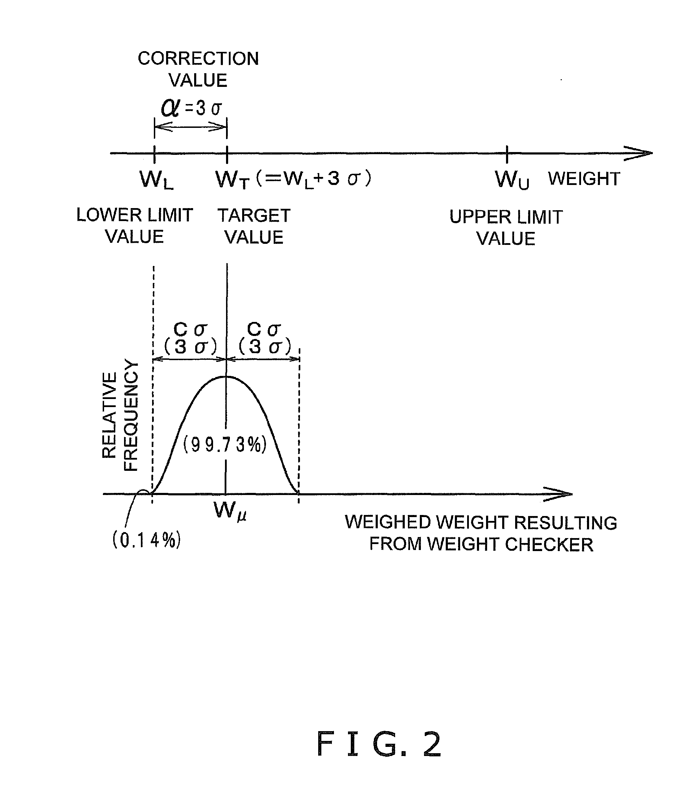

FIG. 1 is a block diagram showing an overview of a weighing system pertaining to the present embodiment, and the white arrows in this diagram represent a flow of goods and packaged products in which the goods have been packaged. FIG. 2 is a diagram describing the calculation of a correction value in the weighing system pertaining to the present embodiment.

### (Weighing System 1)

A weighing system 1 (FIG. 1) pertaining to the present embodiment is a system for quantitatively weighing goods G and is equipped with plural weighing means 2 ·· 2, combinatorial computing means 3, packaging means 4, conveying means 5 and weight checking means 6. The plural weighing means 2 ·· 2 weigh the goods G. The combinatorial computing means 3 performs combinatorial computation of weighing results resulting from the weighing means 2 ··2. Moreover, the combinatorial computing means 3 selects a combination that is close to a target value W_{T} and causes the goods G of that combination to be discharged from the corresponding weighing means 2. The target value W_{T} is a value that is within a predetermined weight range (lower limit value W_{L} to upper limit value W_{U}) and is obtained by adding a correction value α to the lower limit value W_{L} of the predetermined weight range. The packaging means 4 packages the goods G that have been discharged from the weighing means 2 of the combination to manufacture packaged products. The conveying means 5 conveys the packaged products P that have been packaged by the packaging means 4. The weight checking means 6 checks weights of the packaged products P conveyed by the conveying means 5. It will be noted that the predetermined weight range W_{L} to W_{U} is an allowable weight range relating to content weights of the packaged products P.
Moreover, the weighing system 1 is equipped with sorting means 7. The sorting means 7 sorts the packaged products P on the basis of the checking results resulting from the weight checking means 6 into proper weight products whose content weights fall within the predetermined weight range W_{L} to W_{U} and underweight/overweight products whose content weights fall outside the predetermined weight range W_{L} to W_{U}.
Further, the weighing system 1 is equipped with correction value computing means 8 and correction value inputting means 9. The correction value computing means 8 calculates the correction value α on the basis of checking results resulting from the weight checking means 6. The correction value inputting means 9 inputs the correction value α that has been calculated by the correction value computing means 8 to the combinatorial computing means 3. Thus, the weighing system 1 always corrects the target value W_{T}.
Moreover, the weighing system 1 is equipped with correction value setting means 10.
The correction value setting means 10 is configured such that it can set a desired operating rate and yield rate. Moreover, the correction value setting means 10 transmits an instruction signal to the correction value computing means 8 to cause the correction value computing means 8 to calculate a correction value that satisfies the set operating rate and yield rate.

### (Weighing Means 2)

The weighing means 2 are weighing hoppers equipped with weight sensors. The weighing means 2 weigh the weights of the goods G that have been received from an upper opening and output weight signals. Moreover, the weighing means 2 open doors closing off lower openings and discharge the goods G on the basis of discharge signals from the combinatorial computing means 3. The weighing means 2 are plurally disposed, and goods such as snack confectionery conveyed from an upstream process are distributively supplied to each of the weighing means 2.

### (Combinatorial Computing Means 3)

The combinatorial computing means 3 performs combinatorial computation of the weight signals that are outputted from the plural weighing means 2 and selects a combination of the goods G whose total weight is closest to the target value W_{T}. The target weight W_{T} is, as mentioned above, a value that falls within the predetermined weight range W_{L} to W_{U} and is obtained by adding the correction value α to the lower limit value W_{L}. The correction value α is calculated by the correction value computing means 8 and is inputted and set by the correction value inputting means 9. Further, the combinatorial computing means 3 outputs, with respect to the weighing means 2 whose combination has been selected, a discharge signal for causing that weighing means to discharge the goods G that the weighing means is holding. It will be noted that, when there is no combination that falls within the predetermined weight range W_{L} to W_{U}, the goods G within the weighing means 2 are forcibly discharged as an erroneous cycle. For this reason, quantitative weighing is temporarily stopped and the operating rate drops.

### (Packaging Means 4)

The packaging means 4 is a bag-making and packaging machine. The packaging means 4 seals lower end portions and side portions of films formed into tubes to form bags. Moreover, the packaging means 4 places into the bags the goods G whose combination has been selected and which have been discharged from the plural weighing means 2. Finally, the packaging means 4 seals upper end portions of the films. Thus, the packaging means 4 manufactures the packaged products P in which the goods G have been packaged.

### (Conveying Means 5)

The conveying means 5 is a belt conveyor. The conveying means 5 receives the packaged products P that have been manufactured by the packaging means 4. Further, the conveying means 5 conveys the packaged products P to the weight checking means 6. The weight checking means 6 is disposed downstream of the weighing means 2 and the packaging means 4. It will be noted that a chute through which the packaged products P slide and drop from above to below may also be employed instead of a belt conveyor.

### (Weight Checking Means 6)

The weight checking means 6 is a weight checker. The weight checking means 6 is disposed downstream of the weighing means 2. Further, the weight checking means 6 weighs the weights of the goods G (more specifically, the packaged products P) that have been discharged from the weighing means 2 to determine the appropriateness of those weights. Specifically, whether or not the content weights obtained by subtracting the weight of the packaging material (tare weight) from the packaged products P fall within the aforementioned predetermined weight range W_{L} to W_{U} is checked. The checking results of the weight checking means 6 are outputted as sorting signals with respect to the sorting means 7, and weight detection signals are outputted to the correction value computing means 8.

### (Sorting Means 7)

The sorting means 7 sorts the packaged products P that are discharged from the weight checking means 6 into the proper weight products and the underweight/overweight products on the basis of the checking results resulting from the weight checking means 6. The proper weight products are conveyed to a downstream process where box packing and the like are performed, and the underweight/overweight products are discharged to the outside of the production process.

### (Correction Value Computing Means 8)

The correction value computing means 8 calculates a correction value α that satisfies a predetermined operating rate and yield rate on the basis of the checking results resulting from the weight checking means 6, that is, the weight detection signals, to determine a target value W_{T} (= W_{L} + α) of the combination selection resulting from the combinatorial computing means 3. The calculation of the correction value α by the correction value computing means 8 is performed as follows. First, the correction value computing means 8 calculates weighing differences δ between weighed weight values W_{X} resulting from the weight checking means 6 and an average weight value W_{µ} of the packaged products P that have been weighed up until then. Moreover, on the basis of the weighing differences δ and a variance σ² of the weighing difference distribution up until then, the correction value computing means 8 calculates a new variance σ². Then, the correction value computing means 8 calculates Cσ, as a new correction value α, which is obtained by multiplying a standard deviation σ by C times (C: constant). The standard deviation is obtained from the new variance σ². And the correction value computing means 8 outputs the new correction value α to the correction value inputting means 9.

### (Correction Value Inputting Means 9)

The correction value inputting means 9 sets and inputs, with respect to the combinatorial computing means 3, the correction value α that has been calculated by the correction value computing means 8. Thus, W_{L} + α obtained by adding the correction value α to the lower limit value W_{L} becomes the target value W_{T} in the combinatorial computation.

### (Correction Value Setting Means 10)

The correction value setting means 10 makes it possible for an operator to set a predetermined operating rate and yield rate. Further, the correction value setting means 10 transmits an instruction signal with respect to the correction value computing means 8 such that the correction value computing means 8 calculates a correction value α that can achieve the set predetermined operating rate and yield rate.

### (Operation of Weighing System 1)

Combinatorial weighing, packaging and weight-checking of the goods G by the weighing system 1 will be described. First, the goods G conveyed from the upstream process are distributively supplied to the plural weighing means 2, and each of the plural weighing means 2 performs weight weighing. Next, the combinatorial computing means 3 to which those weighing signals have been transmitted selects a combination that is close to the target value W_{T}. The target value W_{T} falls within the predetermined weight range W_{L} to W_{U} and is obtained by adding the correction value α to the lower limit value W_{L}. Then the combinatorial computing means 3 transmits a discharge signal to the weighing means 2 of that combination. The weighing means 2 corresponding to that combination discharges the goods G that are being held in response to the discharge signal. The packaging means 4 collectively packages the discharged goods G to manufacture the packaged products P.
The packaged products P are conveyed downstream by the conveying means 5 and are carried to the weight checking means 6. The weight checking means 6 weighs the weights of the packaged products P and transmits those weight detection signals to the correction value computing means 8. Further, the weight checking means 6 checks whether or not the content weights of the packaged products P fall within the predetermined weight range W_{L} to W_{U} and outputs sorting signals corresponding to those checking results. The sorting means 7 conveys the proper weight products whose content weights fall within the predetermined weight range W_{L} to W_{U} to the downstream process in response to the sorting signals and discharges underweight/overweight products whose content weights fall outside the predetermined weight range W_{L} to W_{U} to the outside of the process. The correction value computing means 8 calculates the correction value α on the basis of the received weight detection signals. The correction value inputting means 9 sets the correction value α with respect to the combinatorial computing means 3.

### (Calculation of Correction Value α)

When the weighing differences δ have a normal distribution as shown in the lower portion of FIG. 2, the percentage of weighing data included within the range of W_{µ} ± Cσ whose median value is the average weight value W_{µ} is theoretically unequivocally determined. For example, when C = 3, the percentage of weighing data theoretically included within the range of W_{µ} ± 3σ becomes 99.73%. Consequently, as shown in the upper portion of FIG. 2, when the target value W_{T} (= W_{L} + 3σ) is set as the correction value α = 3σ, the combinatorial weighing value becomes less than the lower limit value W_{L}, the percentage of the goods G that are forcibly discharged becomes about 0.14% [≈ (100 - 99.73) ö 2], and the operating rate becomes 99.86%. Conversely, by setting the operating rate beforehand, the constant C is unequivocally determined from the normal distribution curve and the correction value α (= Cσ) corresponding thereto becomes automatically calculated.
Further, by setting the yield rate [= W_{L} ö (W_{L} + Cσ) × 100] beforehand, the constant C is unequivocally determined and the correction value α becomes automatically calculated in accordance therewith. Because it is as described above, by setting a predetermined operating rate and yield rate beforehand in the correction value setting means 10, the correction value α that achieves the predetermined operating rate and yield rate can be calculated. For example, when the average unit weight of the goods G that are supplied from the upstream process fluctuates, usually the standard deviation σ also fluctuates (e.g., when the average unit weight becomes larger, usually the standard deviation σ also becomes larger), but the constant is also changed in accordance therewith and the appropriate correction value α is determined.
Incidentally, when the goods G are a sticky substance, such as food boiled in soy sauce, and adhere to the weighing means 2, there is a tendency for the weight value of the goods G that are actually discharged from the weighing means 2 whose combination has been selected to naturally become smaller than the weighing values resulting from the combinatorial computing means 3. However, in the present weighing system 1, the correction value α is calculated on the basis of the checking results of the weight checking means 6 that is disposed downstream of the weighing means 2, so a situation where goods that have been combinatorially computed within the predetermined weight range W_{L} to W_{U} become short weight (underweight products) as packaged products is prevented. In other words, even when, due to circumstances such as the characteristics of the goods G, a difference arises between the weighing values resulting from the combinatorial computing means 3 and the weighing values of the goods that have actually been discharged or packaged, the appropriate correction value α is calculated without being affected thereby, and it is not necessary to administer any kind of special processing with respect thereto.

### (Characteristics of Weighing System 1 Pertaining to Embodiment)

Because it is as described above, the weighing system 1 pertaining to the embodiment has the following characteristics.
First, the weighing system 1 pertaining to the embodiment performs quantitative weighing with the plural weighing means 2 and the combinatorial computing means 3. The combinatorial computing means 3 performs combinatorial computation of the weighing results resulting from the plural weighing means 2, selects a combination that is closest to the target value W_{T} that is within the predetermined weight range W_{L} to W_{U} and that is obtained by adding the correction value α to the lower limit value W_{L}, and causes the weighing means 2 to discharge the goods. Further, the weighing system 1 has the characteristic that it is equipped with the weight checking means 6, the correction value computing means 8 and the correction value inputting means 9. The weight checking means 6 is disposed downstream of the weighing means 2 and checks the weights of the goods G that have been discharged from the weighing means 2 of that combination. The correction value computing means 8 calculates the correction value α on the basis of the checking results resulting from the weight checking means 6. The correction value inputting means 9 inputs the correction value α to the combinatorial computing means 3.
The weighing system 1 corrects the target value W_{T} of the quantitative weighing on the basis of the checking results of the weight checking means 6 that is located downstream of the weighing means 2 for performing quantitative weighing, so even when the weighing values resulting from the weighing means 2 and the weight values of the goods G that have actually been discharged from the weighing means 2 differ due to the affect of adherence of the goods to the weighing means 2 or the like, appropriate correction is performed and a substantive drop in the operating rate is avoided.
Second, the correction value computing means 8 has the characteristic that it calculates the correction value α that satisfies the predetermined operating rate and yield rate in accordance with the setting from the correction value setting means 10. Consequently, when a high operating rate must be ensured such as when product shipments are being rushed, or when a higher yield rate must be ensured even when, conversely, the operating rate deteriorates somewhat, production efficiency matching the circumstances at those times can be improved.
Third, the weighing system 1 pertaining to the embodiment has the characteristic that it is equipped with the packaging means 4 and the sorting means 7. The packaging means 4 packages the goods G that are discharged from the weighing means 2 to manufacture the packaged products P. The sorting means 7 sorts the packaged products P on the basis of the checking results of the weight checking means 6. The weighing system 1 performs weight checking after packaging, so shipments of underweight products or overweight products resulting from circumstances arising between combinatorial computation and packaging are reliably prevented. Further, the weight checking means 6 is used for performing sorting according to the weights of the packaged products and is not disposed with dedicated means for correction value calculation, so system costs are inexpensive.
In addition to the above, the weighing system of the present invention is not limited to the embodiment, and various changes may be made thereto in a range that does not depart from the gist of the present invention.

## Claims

1. A weighing system comprising:
plural weighing means that weigh goods;
combinatorial computing means that performs combinatorial computation of weighing results obtained by the weighing means, selects a combination of the goods that is close to a target value which is a value within a predetermined weight range and obtained by adding a correction value to a lower limit value of the predetermined weight range, and causes the goods to be discharged from the weighing means;
weight checking means that is disposed downstream of the weighing means and checks weights of the goods that have been discharged from the weighing means;
correction value computing means that calculates the correction value on the basis of checking results obtained by the weight checking means; and
correction value inputting means that inputs the calculated correction value to the combinatorial computing means.

2. The weighing system according to claim 1, wherein the correction value computing means calculates a correction value that satisfies a predetermined operating rate and yield rate.

3. The weighing system according to claim 1 or 2, further comprising
packaging means that packages the goods that have been discharged from the weighing means to manufacture packaged products and
sorting means that sorts the packaged products on the basis of the checking results obtained by the weight checking means.
